# EUROPEAN PATENT APPLICATION

(11) **EP 4 613 614 A1**
(43) Date of publication of application: **10.09.2025**
(21) Application number: 24191017.3
(22) Date of filing: 25.07.2024
(51) Int. Cl.: B62D 25/00, B62D 29/00

(54) **DEVICE FOR SEALING AT LEAST ONE HOLE IN A BODY**

(30) Priority: 07.03.2024 US 202463562375 P
(71) Applicant: Sika Technology AG, 6340 Baar (CH)
(72) Inventor: HAEGEL, Yannick, 1480 Saintes (BE); VANDENBERG, Yves, 1480 Saintes (BE); LINDGREN, Henrik, 1480 Saintes (BE); MORLET, Thibaut, 1480 Saintes (BE)
(74) Representative: Sika Patent Attorneys

(57) **Abstract**

The present invention relates to a device (10) for sealing at least one hole (31) in a body (30), in particular in a vehicle body (30), preferably in a body-in-white vehicle body (30), the device (10) having an expandable sealing means (11) and a carrier structure (12) for the sealing means (11), the carrier structure (12) comprising the following: a carrier plate (13) with a first carrier side (14) and a second carrier side (21), wherein the first carrier side (14) is arranged on a side of the carrier plate (13) opposite to the second carrier side (14), and wherein the sealing means (11) is arranged on the first carrier side (14); a connecting means (17) which protrudes from the first carrier side (14) of the carrier plate (13) and is configured to connect the device (10) to the body (30) with the first carrier side (14) facing towards the body (30); and a boundary wall (15) which protrudes from the first carrier side (14) of the carrier plate (13) and delimits the sealing means (11) at least in sections, the boundary wall (15) having an outlet opening (16) for the sealing means (11), wherein the boundary wall (15) is configured to guide the sealing means (11) through the outlet opening (16) in direction of the hole (31) during expansion in order to seal the hole (31). The invention further relates to a method for sealing at least one hole (31) in a body (30).

## Description

The invention relates to a device for sealing at least one hole in a body and to a method for sealing at least one hole in a body.

To seal holes in bodies, in particular holes in body-in-white vehicle bodies, devices are used which usually have an expandable, for example heat-activatable, sealing means and a carrier structure for the sealing means. To seal a hole, such devices are usually first placed over or against the hole with the sealing means facing towards the hole, so that the sealing means essentially covers the hole. Subsequently, the expansion of the sealing means is activated, for example by applying heat, whereby the sealing means is pressed flat against the area of the body with the hole and seals the hole in this way.

Typically, holes occur in angled areas, for example corner areas, of the body. Such holes require a geometry of the carrier structure that is adapted to the shape of the body in the area of the hole in order to be able to connect the device to the body so close to the body that the hole is essentially covered by the sealing means, thus ensuring a tight closure of the hole. It is therefore known to manufacture a separate or dedicated device for each hole to be sealed, which is adapted to the hole to be sealed. The disadvantage of this is the increased manufacturing effort involved in producing such devices.

It is therefore the task of the present invention to provide a device for sealing at least one hole in a body, which device can be manufactured with a reduced manufacturing effort. A further task of the present invention is to provide a method for sealing at least one such hole.

According to the invention, this task is solved by a device according to claim 1. With regard to the method, the task is solved by the object of claim 18.

Specifically, the task is solved according to the invention by a device for sealing at least one hole in a body, in particular in a vehicle body, preferably in a body-in-white vehicle body, which has an expandable, in particular foamable, sealing means and a carrier structure for the sealing means, the carrier structure comprising the following:
- a carrier plate with a first carrier side and a second carrier side, wherein the first carrier side is arranged on a side of the carrier plate opposite to the second carrier side, and wherein the sealing means is arranged on the first carrier side;
- a connecting means which protrudes from the first carrier side of the carrier plate and is configured to connect the device to the body with the first carrier side facing towards the body; and
- a boundary wall which protrudes from the first carrier side of the carrier plate and delimits the sealing means at least in sections, the boundary wall having an outlet opening for the sealing means and being configured to guide the sealing means through the outlet opening in direction of the hole during expansion, in particular during foaming, in order to seal the hole.

The invention is thus based on the idea of providing a boundary wall on the first carrier side, in particular an underside, of the carrier plate. The boundary wall bounds the sealing means, in particular in a plane essentially parallel to the first carrier side, at least in sections. The boundary wall further has an outlet opening for the sealing means, in particular pointing in at least one direction extending in a plane essentially parallel to the first carrier side of the carrier plate. The boundary wall is thus arranged in such a way that it prevents the sealing means from expanding, at least in sections, and in this way guides the sealing means in the direction of the outlet opening. As a result, more sealing means escapes outwards through the outlet opening during expansion, so that a controlled or directed expansion of the sealing means, i.e. an expansion directed towards a target, in particular towards the hole, is achieved.

The device according to the invention, in particular the boundary wall, thus makes it possible to guide the sealing means in a targeted manner in the direction of the hole in order to seal the hole in this way. This means that the device does not have to be attached directly with the sealing means over or on the hole, but can be connected to the body away from the hole. This allows the device, in particular the carrier structure, to have a geometry that is independent of the specific shape of the body in the area of the hole and thus standardized. In other words, the device can be used for different bodies with different shapes in the area of the hole. It is not necessary to produce a geometry adapted to the respective hole. This considerably reduces the manufacturing effort.

Since the sealing means can be guided to the hole by directional expansion and does not have to be arranged directly at the hole, the carrier structure does not need to extend from the connecting means to the hole. Rather, it is sufficient if the spatial dimension of the carrier structure is essentially limited to the connecting means or to the point on the body where the device is connected to the body. This results in a particularly compact design of the device. On the one hand, this has the advantage of saving material. On the other hand, this makes it easier to feed the sealing means to the hole, as the device can be connected to the body sufficiently close to the hole even in confined spaces.

The directed expansion of the sealing means towards the hole also ensures that the amount of sealing means can be precisely adapted to the size of the holes that are usually sealed with the device, for example so-called rat holes. Additional sealing means that does not serve the purpose of sealing the hole can thus be saved. The device according to the invention therefore advantageously reduces the amount of sealing means required.

The connecting means makes it possible to connect the carrier structure to the body, i.e. to bring the carrier structure at least into contact with the body, with the first carrier side of the carrier plate facing towards the body so that the device is at least securely or stably arranged on the body and the sealing means points in the direction of a surface of the body. In this way, a controlled expansion of the sealing means in the direction of the hole can be achieved.

A hole can be a through opening that forms a passage through the body, e.g. through a wall or the floor. The through opening is open on both sides of the passage. A hole can also be a recess which, in contrast to the through opening, has a closed wall. The wall thickness in the area of the recess can therefore be less than in the adjacent area outside the recess.

Such holes can occur in various bodies. For example, vehicle bodies, especially body-in-white vehicle bodies, can have undesirable holes that need to be sealed. Such holes, which can also be referred to as rat holes, can occur, for example, when several metal sheets are joined together, but the sheets cannot be formed in such a way that a completely closed or flush joint is possible, for example due to process-related restrictions.

The present invention thus takes a different approach than the prior art, which proposes devices which usually have a sealant which, in the unexpanded state, is distributed over a large area or spatially distributed over the device in order to seal large or extensive holes, in particular cross-sections or cavities, for example of an A-pillar of a vehicle. Rather, the invention proposes a device with a sealant which, in the non-expanded state, is spatially concentrated, i.e. in a compact form, accommodated on the first carrier side and can be directed specifically to the hole through the outlet opening during expansion in order to seal preferably small holes, in particular rat holes, which typically occur in angled, difficult-to-access corner areas of a vehicle body.

The carrier plate, which as a plate has a dimension in a plate plane that corresponds to a multiple of the thickness or strength of the carrier plate, i.e. the distance between the first carrier side, in particular the underside, and a second carrier side, in particular an upper side, and the arrangement of the sealing means directly on the first carrier side of the carrier plate also advantageously reduces the overall height of the device.

The sealing means according to the invention is designed to expand, in particular to foam up, whereby the expansion can be activated, in particular heat-activated. The expansion can thus be activated, for example, by heating or cooling the sealing means to a certain temperature. Activation can also take place in other ways, for example by applying a certain pressure.

The device according to the invention is designed for sealing holes in bodies. Specifically, the device is used for sealing holes in vehicle bodies, in particular body-in-white vehicle bodies. The device can also be used to seal other bodies. It is possible to use the concept according to the invention generally in connection with sealing.

Preferred embodiments of the invention are given in the sub-claims.

In a preferred embodiment of the invention, the boundary wall has two opposite wall sections which delimit the outlet opening on two opposite sides of the outlet opening and have a distance from one another which is equal to a width of the outlet opening or is smaller than the width of the outlet opening, in particular along the overall length of the wall section. By limiting the sealing means on two opposite sides, it is achieved that less sealing means passes past the outlet opening during expansion and thus less material passes outwards in a direction that does not point in the direction of the hole to be sealed. This means that more sealing means is guided through the outlet opening in the direction of the hole, which improves the supply of sealing means and thus the sealing of the hole. The fact that the distance between the wall sections is equal to or is smaller than the width of the outlet opening also ensures a particularly wide outlet opening with a small overall width of the device. The increased width of the outlet opening further increases the amount of sealing means that passes through the outlet opening and thus towards the hole during expansion. The small overall width of the device, on the other hand, advantageously contributes to the compact design.

In a particularly preferred embodiment of the invention, the distance between the wall sections increases towards the outlet opening. This has the advantage that in the unexpanded state, i.e. before expansion, more sealing means is arranged in the vicinity of the outlet opening. As a result, more sealing means is guided through the outlet opening during expansion and thus in the direction of the hole, so that the supply of sealing means and thus the sealing of the hole is further improved. For a particularly effective supply of the sealing means to the hole, it is also advantageous if the distance between the wall sections increases continuously or evenly. In this way, more sealing means can spread evenly between the wall sections in the direction of the outlet opening during expansion without having to move past the outlet opening, for example under the boundary wall, i.e. between the boundary wall and the body, to the side.

It is preferable if the boundary wall has a connecting wall section which is arranged on the first carrier side and on a side of the carrier plate opposite the outlet opening, wherein the connecting wall section connects the wall sections to one another. The connecting wall section at least partially prevents the sealing means from expanding in a direction opposite to the outlet opening and thus opposite to the hole. The amount of sealing means that expands through the outlet opening in the direction of the hole is thus further increased.

In a further preferred embodiment, the boundary wall has a height which is equal to or is greater than the height of the sealing means in the unexpanded state. This ensures that the boundary wall completely bounds the height of the sealing means. During expansion, less sealing means passes past the outlet opening during expansion, in particular escapes under the boundary wall, so that more sealing means is guided through the outlet opening in the direction of the hole. This further improves the supply of sealing means to the hole and thus the sealing of the hole.

Preferably, the carrier structure has a handle which protrudes from the second carrier side of the carrier plate. The device can be easily gripped in this way, for example to align the device with the outlet opening facing towards the hole and connect it to the body accordingly. This advantageously improves the handling of the device and thus facilitates the sealing of the hole.

It is advantageous if the handle is arranged at a distance from the outlet opening measured along the second carrier side of the carrier plate. In other words, it is advantageous if the handle is at a distance from the outlet opening in a direction that extends in a plane parallel to the second carrier side. On the one hand, this saves material. On the other hand, this ensures a low overall height in the area of the outlet opening in order to connect the outlet opening to the body sufficiently close to the hole, even in cavities with a low height.

In a further advantageous embodiment of the invention, the carrier structure has at least one edge which is arranged on the second carrier side, the edge having two legs which are arranged at an angle to each other in such a way that they indicate the direction of the outlet opening in a plan view, in particular in a top view, of the second carrier side. The two legs of the edge are thus designed to point in the direction of the hole. This makes it easier to align the device correctly when connecting it to the body, thus reducing the assembly effort and the risk of misalignment of the device and thus incorrect sealing of the hole. The legs can be arranged at an angle to each other in such a way that they form an arrowhead, in particular a rounded arrowhead, which indicates the direction of the outlet opening in a plan view.

Preferably, the sealing means encloses the connecting means at least in sections. This ensures that, in addition to the hole, the sealing means also seals a corresponding receiving means, for example an opening, for the connecting means on or in the body during expansion. This can advantageously save additional sealing means for sealing the receiving means. Due to the reduced amount of sealing means, the carrier structure can also be smaller. The sealing means preferably has a recess or opening, in particular a slot, through which the connecting means extends, the recess preferably being open in at least one direction extending in a plane essentially parallel to the first carrier side of the carrier plate. The recess can also be closed in all directions extending parallel to the first carrier side. The sealing means can also be formed differently.

A further preferred embodiment of the invention provides that the connecting means is insertable into a receiving means of the body and is configured to cooperate with the receiving means in a form-fitting manner in at least one direction. This fixes the device to the body in at least one direction to the carrier plate. Undesired movement, for example slippage of the device, relative to the body and thus relative to the hole in this direction, for example caused by expansion of the sealing means, can be prevented in this way. The supply of the sealing means to the hole is further improved in this way. The simple fixation by means of form-fitting also makes the connecting means particularly easy to manufacture.

Preferably, the connecting means has at least one projection which, in a direction facing away from the first carrier side, in particular perpendicular to the first carrier side, forms an undercut for latching connection with the receiving means. The projection is thus adapted to fix the device to the body in a direction away from the first carrier side. In this way, unwanted movement, for example lifting, of the device relative to the body, for example caused by expansion of the sealing means, can be prevented. The supply of the sealing means to the hole is further improved in this way. In a particularly preferred embodiment, the connecting means has two such projections extending outwards in opposite directions. To make it easier to establish and/or release the latching connection, the connecting means can be designed in such a way that the distance between these two projections can be adjusted, for example by pressing them together.

A further advantageous embodiment provides that the connecting means is adapted to the receiving means of the body in such a way that the connecting means is insertable into the receiving means in only one orientation relative to the receiving means and/or to the body. Preferably, insertion of the connecting means into the receiving means is only possible in the orientation in which the outlet opening points in the direction of the hole. Insertion in all other orientations, on the other hand, is prevented, for example by geometric constraint. This prevents incorrect alignment of the device, further reducing the assembly effort and the risk of incorrect sealing of the hole. Such a constructive safety measure can also be referred to as a poka-yoke measure.

In this context, it is particularly preferable if the connecting means has an outer contour, which, in a plan view of the first carrier side, forms two fitting contours arranged on opposite sides of the connecting means, the fitting contours being asymmetrical to one another and being adapted to cooperate with an inner contour of the receiving means in a form-fitting manner. This provides a particularly simple way of implementing the poka-yoke measure. The fitting contours form a geometric constraint that ensure that the device can be connected to the body, in particular fixed to the body, in only one orientation, in particular with the outlet opening pointing in the direction of the hole. Incorrect alignment of the device relative to the body is thus geometrically prevented.

For a particularly compact design of the device, it is advantageous if the sealing means in the unexpanded state has a volume which is largerthan a volume of the carrier plate, in particular the volume of the sealing means in the unexpanded state is at least twice as large as the volume of the carrier plate. Since the sealing means is guided to the hole during expansion, it can be locally concentrated i.e. limited to an area with low spatial dimension, in the unexpanded state, so that a relatively small carrier plate is sufficient for carrying the sealing means. At the same time, the directed expansion of the sealing means ensures that particularly little sealing means is required.

Preferably, the volume of the sealing means in the unexpanded state is at most approx. 1.5 cm3, in particular at most approx. 1.2 cm3, in particular essentially approx. 1 cm3. This achieves a particularly compact size of the sealant and thus of the device. Furthermore, additional sealant is saved in this way.

In a further preferred embodiment, the sealing means, which in the expanded state is arranged in front of the outlet opening 16, has a volume of at most approx. 15 cm3, in particular at most approx. 12 cm3, preferably at most approx. 10 cm3. This minimises the amount of sealant, and therefore the size of the device, so that after expansion there is just enough sealant in front of the outlet opening, i.e. at the hole, to seal the hole.

Preferably, the device is adapted to seal a hole which is formed at a connection point of at least three planes, wherein the planes are arranged inclined to one other and each form a tangential plane of an outer surface of the body at the connection point. The device is thus preferably adapted to the sealing of holes that are formed in angled, hard-to-reach corner areas of the body. In an embodiment, the planes are sheets of the vehicle body.

A subsidiary aspect of the invention relates to a method for sealing at least one hole in a body, in particular in a vehicle body, preferably in a body-in-white vehicle body, the method comprising the following steps:
- providing a device as described above;
- connecting the device to the body by means of the connecting means in such a way that the outlet opening points towards the hole; and
- activating the expansion, in particular foaming, of the sealing means so that the boundary wall of the device guides the sealing means through the outlet opening to seal the hole.

With regard to the effect and advantages of the method according to the invention, reference is made to the explanations in connection with the device.

The features of the device and the method as described above can be combined with each other without limitations.

The invention is explained in more detail below with reference to the attached schematic drawings. They show:
- Fig. 1: a perspective view of two bodies each with a hole;
- Fig. 2: a side view of a device according to an embodiment of the invention;
- Fig. 3: a further side view of the device of Fig. 2;
- Fig. 4: a perspective view of a device according to a further embodiment of the invention;
- Fig. 5: a plan view of a second carrier side of the device of Fig. 4;
- Fig. 6: a plan view of a first carrier side of the device of Fig. 4; and
- Fig. 7: a mold for manufacturing a plurality of devices according to Fig. 2 and/or Fig. 4.

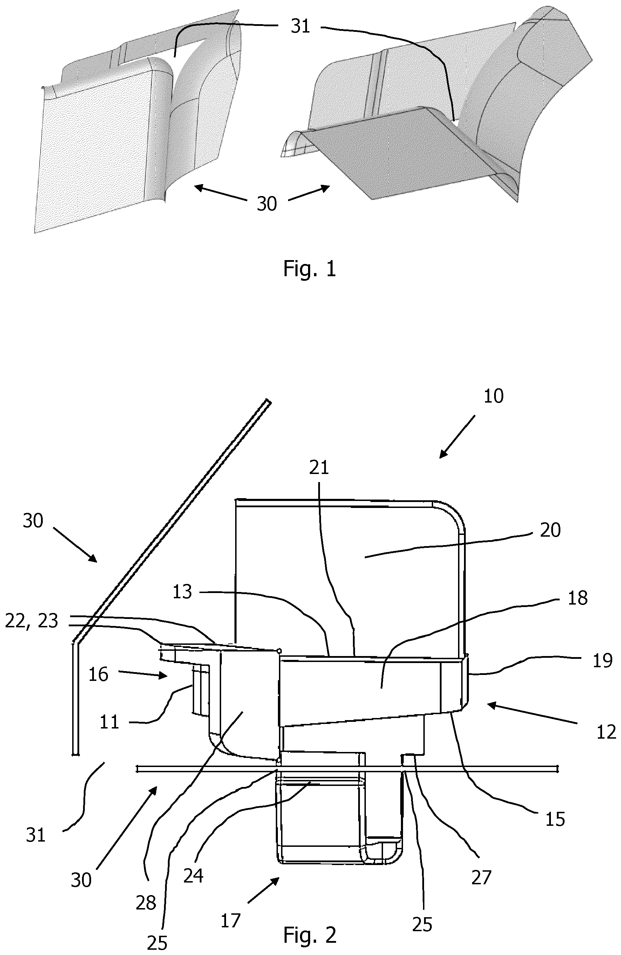

Fig. 1 shows a perspective view of two bodies 30, specifically two parts of a vehicle body, in particular a body-in-white vehicle body, each with a hole 31.

The holes 31 are each arranged in an angled area, in particular in a corner area, of the corresponding body-in-white vehicle body part 30. Specifically, each hole 31 is formed at a connection point of at least three planes, wherein the planes are arranged inclined to one other and each form a tangential plane of an outer surface of the body (30 at the connection point. The holes 31 are through openings. They therefore form a passage through the body part 30 and are open on both sides of the passage.

Fig. 2 shows a side view of a device 10 for sealing a hole 31 in a body 30. The body 30 and the hole 31 is essentially equal to the body-in-white vehicle bodies 30 and the holes 31 of Fig. 1.

The device 10 can also be used in other ways. For example, it can be used to seal several holes 31. The device 10 is also suitable for sealing at least one recess which, in contrast to the through opening, has a closed wall. The invention is not limited to vehicle bodies or body-in-white vehicle bodies.

The device 10 has a sealing means 11. The sealing means 11 is designed to expand, in particular to foam, wherein the expanding can be activated, in particular heat-activated. The expansion can thus be activated, for example, by heating or cooling the sealing means 11 to a certain temperature. Activation can also take place in other ways, for example by applying a certain pressure.

The device 10 has a carrier structure 12 for the sealing means 11. The carrier structure 12 thus carries the sealing means 11. For this purpose, the carrier structure 12 comprises a carrier plate 13 with the first carrier side 14, specifically an underside 14, (not shown in Fig. 2), on which the sealing means 11 is arranged. The sealing means 11 can be firmly connected to the first carrier side 14, for example by material bonding or form-fitting. The sealing means 11 can also be attached to the support structure 12 in another way.

The carrier plate 13 has a dimension in a plate plane of the carrier plate 13 that corresponds to a multiple of the thickness of the carrier plate 13, i.e. the distance between the first carrier side 14, in particular underside 14, and the second carrier side 21, in particular an upper side 21. The carrier plate 13 is therefore flat. By arranging the sealing means 11 directly on the first carrier side 14 of the flat carrier plate 13, the device 10 has a particularly low overall height.

Specifically, the first carrier side 14, the plate plane and the second carrier side 21 are arranged substantially parallel to each to other. The first carrier side 14 and the second carrier side 21 can also be arranged at an angle each other and to the plate plane.

The carrier structure 12 comprises a connecting means 17 for connecting the device 10, specifically the carrier structure 12, to the body 30. For this purpose, the connecting means 17 is designed to protrude from the first carrier side 14 of the carrier plate 13, so that the device 10 can be connected to the body 30 with the first carrier side 14 towards the body 30 by means of the connecting means 17.

The carrier structure 12 comprises a boundary wall 15, which protrudes from the first carrier side 14 of the carrier plate 13 and bounds the sealing means 11 in a plane parallel to the first carrier side 14 at least in sections. The boundary wall 15 thus covers or shields the sealing means 11 in at least one direction extending in a plane parallel to the first carrier side 14. In other words, the boundary wall 15 is arranged in such a way that it prevents expansion of the sealing means 11 in a plane parallel to the first carrier side 14 at least in sections.

The boundary wall 15 also has an outlet opening 16 for the sealing means 11, which points in a direction extending in a plane essentially parallel to the first carrier side 14. The outlet opening 16 thus forms a through opening for the sealing means 11, through which the sealing means 11 can pass from an inner area, which is bounded by an inner side of the boundary wall 15 and the first carrier side 14 of the carrier plate 13 and in which the sealing means 11 rests in the unexpanded state, to the outside.

The boundary wall 15 is designed to guide the sealing means 11 through the outlet opening 16 in the direction of the hole 31 during expansion, in particular during foaming, in order to seal the hole 31. The boundary wall 15 is thus able to direct or control the spread or expansion of the sealing means 11 at least partially through the outlet opening 16 in the direction of the hole.

This is achieved in particular by the boundary wall 15 preventing expansion of the sealing means 11 in a plane parallel to the first carrier side 14, at least in sections, and in this way guiding the sealing means 11 in the direction of the outlet opening 16. As a result, more sealing means 11 escapes outwards through the outlet opening 15 during expansion, so that an expansion of the sealing means 11 directed towards the hole 31 is achieved.

The boundary wall 15 therefore makes it possible to guide the sealing means 11 specifically in the direction of the hole 31 in order to seal the hole 31 in this way. For this reason, the device 10 can be connected to the body 30 away from the hole 31, as Fig. 2 clearly shows. As a result, it can have a geometry that is independent of the specific shape of the body 30 in the area of the hole 31 and thus standardized. In addition, the spatial dimension of the carrier structure 12 can essentially be limited to the connecting means 17 and does not have to extend as far as the hole 31, so that the device 10 is particularly compact.

The boundary wall 15 has two opposite wall sections 18, which delimit the outlet opening 16 on two opposite sides of the outlet opening 16. In other words, the outlet opening 16 is formed by the wall sections 18 and the first carrier side 14. The wall sections 18 thus bound the sealing means 11 from two opposite sides. The sealing means 11 is thus arranged at least partially between the wall sections 18. Specifically, the sealing means 11 extends from one wall section 18 to the opposite wall section 18. In the unexpanded state, the sealing means 11 can also be arranged between the wall sections 18 at a distance from one wall section 18 or from both wall sections 18.

The wall sections 18 have a distance from one another that is equal to or is smaller than the width of the outlet opening 16. In other words, the distance between the wall sections 18 along the wall sections 18 is at most as large as the width of the outlet opening 16, whereby this distance can also be smaller in some sections and can therefore change along the wall sections 18. The outlet opening 16 is therefore at least as wide as the interior space between the wall sections 18.

Specifically, the distance between the wall sections 18 increases towards the outlet opening 16. The interior space between the wall sections 18 thus has the greatest width at the outlet opening 16 and decreases with distance from the outlet opening 16. The wall sections 18 are designed in such a way that the distance between the wall sections 18 increases continuously or evenly in the direction of the outlet opening 16. The wall sections 18 extend essentially in a straight line along the carrier plate 13.

The boundary wall 15 has a connecting wall section 19, which is arranged on the first carrier side 14 and on a side of the carrier plate 13 opposite the outlet opening 16, wherein the connecting wall section 19 connects the wall sections 18 to one another. The connecting wall section 19 thus closes off the interior space between the wall sections 18 in a direction facing away from the outlet opening 16. The boundary wall 15 thus encloses the sealing means 11 from three sides. In other words, the boundary wall 15 extends from one side of the outlet opening 16 around the sealing means 11 to the other side of the outlet opening 16. It thus substantially completely bounds the sealing means 11 in a circumferential direction, which lies in a plane parallel to the first carrier side 14.

In principle, the boundary wall 15 can bound the sealing means 11 from only one side or from two or more sides, both in sections and completely.

The boundary wall 15 has a height that is equal to or is greater than the height of the sealing means 11 in the unexpanded state. The boundary wall 15 thus completely bounds the height of the sealing means 11. Specifically, the boundary wall extends from the carrier plate 13 to an first carrier side 14, specifically the lower edge, of the sealing means 11, so that the sealing means 11 is completely covered along a direction facing away from the carrier plate 13, in particular a direction essentially perpendicular to the carrier plate 13.

The boundary wall 15 can also be designed in such a way that it only bounds the sealing means 11 in sections or partially in height. In this case, the boundary wall 15 can nevertheless have a height that is at least equal to the height of the sealing means 11 in the unexpanded state, for example by having one or more through openings.

The height of the boundary wall 15 increases with decreasing distance from the outlet opening 16. The connecting wall section 19 thus has a height that is equal to or less than the height of the wall sections 18, with the height of the wall sections 18 increasing starting from the connecting wall section 19, in particular continuously, up to the outlet opening 15.

In the unexpanded state, the sealing means 11 is thus completely bound or covered by the boundary wall 15 in a plane parallel to the first carrier side 14, except for the area of the outlet opening 16.

In this way, the boundary wall 15 prevents the sealing means 11 from expanding in plane parallel to the first carrier side 14, so that the amount of sealing means 11 that spreads past the outlet opening 16 below the boundary wall 15 in a direction that does not point towards the hole 31 to be sealed is considerably reduced. Rather, the boundary wall 15 guides a substantial part of the expanding sealing means 11 through the outlet opening in the direction of the hole 31 in order to seal it.

The boundary wall 15 is formed in one piece. The boundary wall 15 can also be formed in two or more pieces.

The carrier plate 13 extends in the plate plane to the outside of the boundary wall 15. The carrier plate 13 is thus flush with the side of the boundary wall 15.

The carrier structure 12 has a handle 20 which protrudes from the second carrier side 21 of the carrier plate 13, in particular substantially vertically. The handle 20 is flat or plate-shaped. Starting from the connecting wall section 19, it extends along the second carrier side 21 in an outlet direction of the outlet opening 16, i.e. in a direction that intersects an opening area of the outlet opening 16 substantially vertically and points away from the sealing means in the unexpanded state. The handle 20 is arranged in a central or centered position relative to the carrier plate 13. It thus extends in a middle plane, in particular a plane of symmetry, of the carrier plate 13, specifically carrier structure 12. Other geometries and arrangements of the handle 20 are possible.

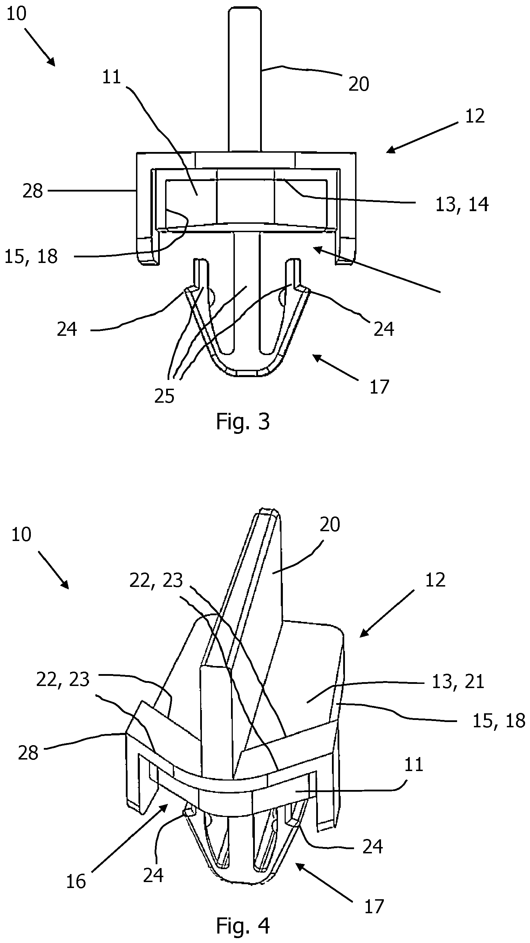

The handle 20 is arranged at a distance from the outlet opening 16 measured along the second carrier side 21 of the carrier plate 13. Specifically, the handle 20 is arranged offset to the rear in the outlet direction, so that a low overall height of the device 10 is ensured in the area of the outlet opening 16. The handle 20 thus extends from the connecting wall section 19 in the outlet direction along the second carrier side 21 to a position between the connecting wall section 19 and the outlet opening 16. The handle 20 can also extend from the connecting wall section 19 in the outlet direction along the second carrier side 21 to an outermost edge 22 of the carrier structure 12 in the outlet direction, as shown in Figs. 4 to 6.

The carrier structure 12 has at least one edge 22 which is arranged on the second carrier side 21, the edge 22 having two legs 23 which are arranged at an angle to each other in such a way that they indicate the direction of the outlet opening 16 in a plan view of the second carrier side 21, specifically in a top view of the device 10. The two legs 23 are thus arranged at an angle to each other in such a way that they form an arrowhead which, in the plan view, indicates the direction of the outlet opening and thus, in use, the direction of the hole.

Specifically, the carrier structure 12 has two such edges 22. The edges 22 are arranged in a plane parallel to the second carrier side 21 and one behind the other in the outlet direction. A first edge 22 is arranged at the upper and, in the outlet direction, outer end of the carrier structure 12. It thus forms an upper outer edge of the carrier structure 12. A second edge 22 is arranged behind the first edge 22 in the exit direction. The legs 23 of the first and second edges 22 converge in the middle plane of the carrier structure 12 and thus form an arrowhead. The arrowhead of the first edge 22 is rounded.

The carrier structure 12 has a sleeve 28 which forms the edges 22. The sleeve 28 has the shape of a U-profile. It comprises two substantially parallel sleeve legs, which are connected to each other by a sleeve bridge. The sleeve legs and the sleeve bridge are each plate-shaped. The sleeve bridge is arranged on the second carrier side 21 of the carrier plate 13 above the outlet opening 16 and extends between the edges 22. The sleeve legs are arranged on the outside of the boundary wall 15. They have a height that is greater than the height of the boundary wall 15, so that they protrude above the boundary wall 15, i.e. downwards, in a direction away from the carrier plate 13. The outlet opening 16 is thus arranged between the cuff legs. In this way, the sleeve encloses the outlet opening 16 from three sides, with the side facing away from the carrier plate 13 being open. The sleeve 28 is arranged in the outlet direction in such a way that it projects beyond the carrier plate 13 and beyond the sealing means 11.

In the outlet direction, the carrier plate 13 and the sealing means 11 each have an outer contour with a geometry that substantially corresponds to the geometry of the first edge 22.

The sealing means 11 encloses the connecting means 17 in a plane parallel to the first carrier side 14 at least in sections. The connecting means 17 thus protrudes from the sealing means 11 in a direction away from the carrier plate 13. Specifically, the sealing means 11 has a recess through which the connecting means 17 extends. The recess is open in a direction extending in a plane parallel to the first carrier side 14, specifically in a direction away from the outlet opening 16, thereby forming a slot. The recess can also be closed in all directions extending parallel to the first carrier side 14. The sealing means 11 can be formed differently.

The connecting means 17 is insertable into a receiving means of the body 30. For this purpose, the receiving means of the body 30 can have an opening, for example a through opening or recess, which is designed to receive the connecting means 17. The receiving means can be designed differently.

The connecting means 17 is designed to cooperate with the receiving means in a form-fitting manner in at least one direction. Specifically, the connecting means 17 is designed to cooperate with the receiving means in at least one direction extending in a plane parallel to the first carrier side 14 and in at least one direction facing away from the first carrier side 14, more specifically in at least one direction perpendicular to the first carrier side 14.

In a plane parallel to the first carrier side 14, the connecting means 17 has at least one surface, specifically several surfaces, which can cooperate with at least one mating surface of the receiving means in a form-fitting manner, in particular in a force-transmitting manner, in order to fix the device 10 in at least one direction extending parallel to the first carrier side 14, thereby preventing a relative movement between the device 10 and the body 30 in this direction. Specifically, the connecting means 17 is adapted to the receiving means in such a way that the device 10 can be fixed in all directions extending in a plane parallel to the first carrier side 14.

The connecting means 17 has two opposing projections 24, which form an undercut in a direction facing away from the first carrier side 14 for latching connection with the receiving means. The projections 24 are thus adapted to fix the device 10 to the body 30 in a direction facing away from the first carrier side 14, in particular in a direction perpendicular to the first carrier side 14.

The connecting means 17 has an extension which extends from the first carrier side 14 of the carrier plate 13, in particular vertically, to an end of the extension. The extension is plate-shaped and arranged in the middle plane.

The extension has two wings, which are arranged on opposite sides of the extension at a distance from the middle plane and each extend from the end of the extension in a direction towards the first carrier side 14. The wings extend at least in sections parallel to the extension in a direction opposite to the outlet direction and have a distance in the outlet direction from the side of the extension facing away from the outlet opening 15.

The wings each have one of the projections 24 on the side facing away from the extension. On the side facing away from the extension, the wings each comprise a surface which is arranged at a wing end facing the carrier plate 13 and is adapted to cooperate with a corresponding mating surface of the receiving means in a form-fitting manner, in particular in a force-transmitting manner.

The wings of the connecting means 17 are flexible so that they can be pressed together in the direction of the extension. This allows the distance between the projections 24 to be adjusted.

The connecting means 17 is adapted to the receiving means of the body 30 in such a way that the connecting means 17 is insertable into the receiving means in only one orientation relative to the receiving means and/or body 30.

For this purpose, the connecting means 17 has an outer contour, which, in a plan view of the first carrier side 14, forms two fitting contours 25 arranged on opposite sides of the connecting means 17, wherein the fitting contours 25 are asymmetrical to each other and are adapted to cooperate with an inner contour 26 (see Fig. 4) of the receiving means in a form-fitting manner.

Specifically, a first fitting contour 25 is arranged on a side of the connecting means 17 facing the outlet opening 16 and a second fitting contour 25 is arranged on a side of the connecting means 17 facing away from the outlet opening 16. The fitting contours 25 each have a generally rectilinear shape. The first fitting contour 25 is asymmetrical to the second fitting contour 25 in that it comprises several, specifically three, sections, with a middle section substantially corresponding geometrically to the second fitting contour 25. The fitting contours 25 thus have a geometry that differs from one another. The fitting contours 25 can also be arranged or formed differently.

The fitting contours 25 of the connecting means 17 are each adapted to corresponding fitting sections of the inner contour 26 of the receiving means.

The fitting sections of the inner contour 26 are therefore also asymmetrical to one another. In other words, the side of the inner contour 26 facing the outlet opening 16 has a geometry that differs from the geometry of the side of the inner contour 26 facing away from the outlet opening 16. Specifically, the side of the inner contour 26 facing the outlet opening 16 is formed by a first fitting section which is adapted to the first fitting contour 25. The side of the inner contour 26 facing away from the outlet opening 16 has two legs that are angled towards each other and are connected to each other by a second fitting section, the second fitting section being adapted to the second fitting contour 25. The first fitting section is thus longer than the second fitting section.

This asymmetrical design of the fitting contours 25 ensures that the connecting means 17 is insertable into the receiving means in only one orientation, in particular with the outlet opening 16 pointing in the direction of the hole 31. As a result, the device 10 can be fixed to the body 30 in only one orientation. Such a constructive safety measure can also be referred to as a poka-yoke measure.

A step 27 is formed on a side of the extension facing away from the outlet opening 16. The step 27 is arranged between the second fitting contour 25 and the first carrier side 14 of the carrier plate 13, specifically the first carrier side of the sealing means 11.

The step 27 can cooperate with the body 30 in a force-transmitting manner in a direction facing away from the carrier plate 13, in particular perpendicular to the carrier plate. In this respect, the step 27 can form a stop or a contact surface of the carrier structure 12 in a direction facing away from the carrier plate 13 in order to ensure a minimum distance between the sealing means 11 and the body 30. It is also possible that, in a state of the device 10 connected to the body 30, the step 27 does not cooperate with the body 30, so that it is spaced apart from the body 30.

The device 10 has a particularly compact design. This is characterized, among other things, by the small volume of the carrier plate 13 relative to the sealing means 11 in the unexpanded state. Thus, the sealing means 11 in the unexpanded state has a volume which is larger than a volume of the carrier plate 13, in particular at least twice as large as the volume of the carrier plate 13. In the embodiment shown, the volume of the sealing means 11 in the unexpanded state is essentially approx. 1 cm3. The volume of the sealing means 11 in the unexpanded can also be larger, preferably at most approx. 1.5 cm3, in particular at most approx. 1.2 cm3, orsmaller. In the expanded state, the part of the sealing means 11 that is located in front of the outlet opening 16, i.e. outside the intermediate space between the boundary wall 15 and downstream of the outlet opening 16 in the outlet direction, has a volume of at most approx. 15 cm3, in particular at most approx. 12 cm3, preferably at most approx. 10 cm3.

Since the volume of the sealing means is essentially adapted to the size of the hole that are usually sealed with the device 10, specifically rat holes, this design ensures a particularly small size of the carrier plate 13, and thus of the entire device 10. Specifically, the carrier plate 13 has an essentially constant thickness, i.e., a distance between the first carrier side 14 and the second carrier side 21, of approx. 1.5 mm. The sealing means 11 has a thickness, i.e., a dimension in a direction substantially perpendicular to the first carrier side 14, of at most approx. 5 mm, in particular at most approx. 4.7 mm. The sealing means 11 extends in a direction extending in a plane parallel to the first carrier side 14 and transverse to the exit direction by a maximum of approx.20 mm, in particular by maximum of approx. 15 mm, in particular approx. 14.6 mm, and in the exit direction by a maximum of approx. 30 mm, in particular by maximum of approx. 25 mm, in particular approx. 23.8 mm. The boundary wall 15 and the sleeve 28 have thickness of approx. 1.5 mm. The handle 20 has a slightly greater thickness of approx. 2 mm to approx. 3 mm and extends in a direction essentially perpendicular to the second carrier side 21 between approx. 10 mm and approx. 20 mm, in particular approximately approx. 14.3 mm.

In this way, the device 10 is particularly adapted to the sealing of a hole 31 that is formed at a connection point of at least three planes, wherein the planes are arranged inclined to one other and each form a tangential plane of an outer surface of the body 30 at the connection point.

Fig. 3 shows a further side view of the device 10 of Fig. 2, in which the sealing means 11 and the formation of the carrier structure transverse to the middle plane are clearly visible.

Fig. 4 shows a perspective view of a device 10 according to a further embodiment. The device 10 differs from the device 10 according to Fig. 2 and Fig. 3 only by the handle 20. The remaining features are equal to the features of the device 10 shown in Fig. 2 and Fig. 3.

In contrast to the handle 20 according to Fig. 2 and Fig. 3, the handle 20 according to Fig. 4 extends in the outlet direction along the entire carrier plate 13. The handle 20 thus extends from the connecting wall section 19 in the outlet direction along the second carrier side 21 to the first edge 22 of the carrier structure 12.

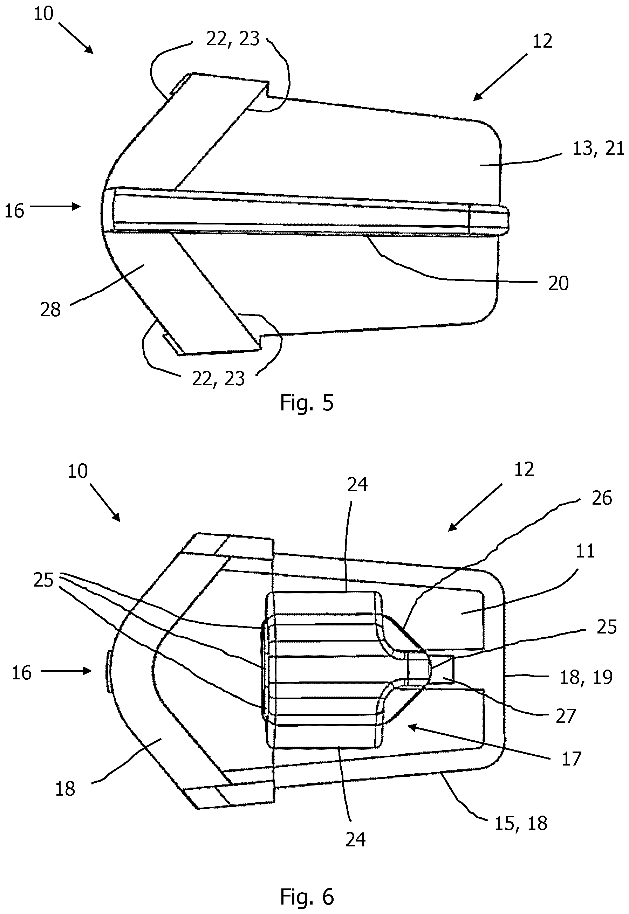

Fig. 5 shows a plan view of the second carrier side 21, specifically a top view, of the device of Fig. 4, in which the formation of the edges 22 and of the carrier plate 13 in plate plane becomes clear.

Fig. 6 shows a plan view of the first carrier side 14, specifically, a bottom view, of the device of Fig. 4. In this view, the shape of the sealing means 11, which is adapted to the shape of the carrier plate 13, becomes clear. Especially the recess in the sealing means 11 through which the connecting means 17 extends and which extends along the carrier plate 13 in a direction away from the outlet opening 16, is clearly visible. The fitting contours 25 and the inner contour 26 of the receiving means of the body 30, which is indicated by a solid line, are also clearly recognizable.

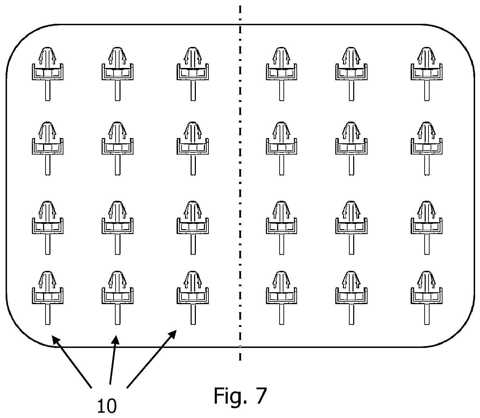

Fig. 7 shows a mold, for example an injection mold or a casting mold, for manufacturing of a plurality of devices according to Fig. 1 and/or Fig. 4. The mold shown demonstrates especially the compact design of the device, which makes it possible to manufacture a large number of devices with a single mold.

## Claims

1. Device (10) for sealing at least one hole (31) in a body (30), in particular in a vehicle body (30), preferably in a body-in-white vehicle body (30), the device (10) having an expandable sealing means (11) and a carrier structure (12) for the sealing means (11), the carrier structure (12) comprising the following:
- a carrier plate (13) with a first carrier side (14) and a second carrier side (21), wherein the first carrier side (14) is arranged on a side of the carrier plate (13) opposite to the second carrier side (14), and wherein the sealing means (11) is arranged on the first carrier side (14);
- a connecting means (17) which protrudes from the first carrier side (14) of the carrier plate (13) and is configured to connect the device (10) to the body (30) with the first carrier side (14) facing towards the body (30); and
- a boundary wall (15) which protrudes from the first carrier side (14) of the carrier plate (13) and delimits the sealing means (11) at least in sections, the boundary wall (15) having an outlet opening (16) for the sealing means (11), wherein the boundary wall (15) is configured to guide the sealing means (11) through the outlet opening (16) in direction of the hole (31) during expansion in order to seal the hole (31).

2. Device (10) according to claim 1, **characterized in that** the boundary wall (15) has two opposite wall sections (18) which delimit the outlet opening (16) on two opposite sides of the outlet opening (16) and have a distance from one another which is equal to a width of the outlet opening (16) or is smaller than the width of the outlet opening (16).

3. Device (10) according to claim 2, **characterized in that** the distance between the wall sections (18) increases, in particular continuously, towards the outlet opening (16).

4. Device (10) according to claim 2 or 3, **characterized in that** the boundary wall (15) has a connecting wall section (19) which is arranged on the first carrier side (14) and on a side of the carrier plate (13) opposite the outlet opening (16), wherein the connecting wall section (19) connects the wall sections (18) to one another.

5. Device (10) according to one of the preceding claims, **characterized in that** the boundary wall (15) has a height which is equal to or greater than a height of the sealing means (11) in the unexpanded state.

6. Device (10) according to one of the preceding claims, **characterized in that** the carrier structure (12) has a handle (20) which protrudes from the second carrier side (21) of the carrier plate (13),
in particular wherein the handle (20) is arranged at a distance from the outlet opening (16) measured alongthe second carrier side (21) of the carrier plate (13).

7. Device (10) according to any one of the preceding claims, **characterized in that** the carrier structure (12) has at least one edge (22) which is arranged on the second carrier side (21), the edge (22) having two legs (23) which are arranged at an angle to each other in such a way that they indicate the direction of the outlet opening (16) in a plan view of the second carrier side (21).

8. Device (10) according to one of the preceding claims, **characterized in that** the sealing means (11) encloses the connecting means (17) at least in sections.

9. Device (10) according to one of the preceding claims, **characterized in that** the connecting means (17) is insertable into a receiving means of the body (30) and is configured to cooperate with the receiving means in a form-fitting manner in at least one direction.

10. Device (10) according to claim 9, **characterized in that** the connecting means (17) has at least one projection (24) which, in a direction facing away from the carrier plate (13), forms an undercut for latching connection with the receiving means.

11. Device (10) according to claim 9 or 10, **characterized in that** the connecting means (17) is adapted to the receiving means of the body (30) in such a way that the connecting means (17) is insertable into the receiving means in only one orientation relative to the receiving means and/or body (30).

12. Device (10) according to one of the claims 9 to 11, **characterized in that** the connecting means (17) has an outer contour, which, in a plan view of the first carrier side (14), forms two fitting contours (25) arranged on opposite sides of the connecting means (17), the fitting contours (25) being asymmetrical to one another and being adapted to cooperate with an inner contour (26) of the receiving means in a form-fitting manner.

13. Device (10) according to one of the preceding claims, **characterized in that** at least one of the following conditions is fulfilled:
- the sealing means (11) in the unexpanded state has a volume which is larger than a volume of the carrier plate (13), in particular the volume of the sealing means (11) in the unexpanded state is at least twice as large as the volume of the carrier plate (13).
- the sealing means (11) has a volume of at most approx. 1.5 cm3, in particular at most approx. 1.2 cm3, preferably at most approx. 1 cm3, in the unexpanded state.
- the sealing means (11), which in the expanded state is arranged in front of the outlet opening (16), has a volume of at most approx. 15 cm3, in particular at most approx. 12 cm3, preferably at most approx. 10 cm3.

14. Device (10) according to one of the preceding claims, **characterized in that** the device (10) is adapted to seal a hole (31) which is formed at a connection point of at least three planes, wherein the planes are arranged inclined to one other and each form a tangential plane of an outer surface of the body (30) at the connection point.

15. Method for sealing at least one hole (31) in a body (30), in particular in a vehicle body (30), preferably in a body-in-white vehicle body (30), the method comprising the following steps:
- providing a device (10) according to any one of the preceding claims;
- connecting the device (10) to the body (30) by means of the connecting means (17) in such a way that the outlet opening (16) points towards the hole (31); and
- activating the expansion of the sealing means (11) so that the boundary wall (15) of the device (10) guides the sealing means through the outlet opening (16) to seal the hole (31).
